# EUROPEAN PATENT SPECIFICATION

(11) **EP 2 050 602 B1**
(45) Date of publication and mention of the grant of the patent: **26.06.2013**
(21) Application number: 07791078.4
(22) Date of filing: 20.07.2007
(51) Int. Cl.: B60H 3/00, B05B 5/057, H01T 23/00, B60H 1/00

(54) **ION GENERATING SYSTEM FOR USING IN A VEHICLE**
AM FAHRZEUG VORGESEHENES IONENERZEUGUNGSSYSTEM
SYSTEME GENERATEUR D'IONS EMBARQUE

(30) Priority: 09.08.2006 JP 2006217419; 09.08.2006 JP 2006217420; 09.08.2006 JP 2006217421; 09.08.2006 JP 2006217422; 26.10.2006 JP 2006291785; 18.01.2007 JP 2007009563
(43) Date of publication of application: 22.04.2009
(73) Proprietor: Panasonic Corporation, Osaka 571-8501 (JP)
(72) Inventor: AKISADA, Shousuke,c/o Panasonic Corporation, Osaka 540-6207 (JP); SUGAWA, Akihide, c/o Panasonic Corporation, Osaka 540-6207 (JP); YANO, Takeshi, c/o Panasonic Corporation, Osaka 540-6207 (JP); OBATA, Kenji, c/o Panasonic Corporation, Osaka 540-6207 (JP); OKUDE, Akio, c/o Panasonic Corporation, Osaka 540-6207 (JP)
(74) Representative: Appelt, Christian W.
(86) International application number: PCT/JP2007/064341
(87) International publication number: WO 2008/018283

(56) References cited:
- JP-A- 2004 001 695
- JP-A- 2005 138 632
- JP-A- 2005 153 795
- JP-A- 2006 001 494
- JP-A- 2006 151 046
- US-A- 5 187 665
- US-A1- 2003 186 644
- US-A1- 2004 094 344
- US-A1- 2005 000 069

## Description

### TECHNICAL FIELD

This invention relates generally to an ion generating system for using in a vehicle. More particularly, this invention relates to an ion generating system which is incorporated into a vehicle, and which is configured to generate ion which is dispensed to the vehicle interior for removing odor, such as US 2003/0186644 A1 which discloses the preamble of claim 1.

### BACKGROUND ART

Japanese Patent Application Publication No. 2006-151046 discloses an ion generator which is attached to the vehicle for sending negative ion to the vehicle interior to remove the bad odor and sterilize the bacteria in the vehicle. In the case where the ion generator is incorporated into the vehicle, the ion generator receives an electrical power from the vehicle's battery and is configured to operate when an ignition switch is turned on. In substance, the ion generator is configured to generate the ion only when an engine is running.

However, users strongly smell the odor of the vehicle when the users get inside the vehicle. Therefore, the users feel discomfort before the user runs the engine. In addition, when the users drive the vehicle, the causative substances which are responsible for the odor and the bacteria on seating face are located between the users and the seats. Therefore, the negative ion generated by the ion generator never adheres to the causative substances responsible for the odor and the bacteria. Consequently, the causative substances responsible for the odor and the bacteria on the seating face may not removed by the negative ion.

### DISCLOSURE OF THE INVENTION

The invention is achieved to solve the above problem. An object of this invention is to provide an ion generating system for effectively removing the odor and sterilizing the bacteria of the vehicle interior before driving the vehicle, thereby the ion generator providing a comfortable vehicle interior.

An ion generating system for using in a vehicle of this invention comprises an ion generator and a controller. The ion generator is configured to be energized by a vehicle's power source to dispense ions into a passenger's room. The controller is configured to start operating the ion generator upon seeing that a certain condition is satisfied. Therefore, it is possible to obtain the ion generator which is configured to be independently operated from an ignition switch. That is, it is possible to obtain the ion generator which is configured to be independently operated from an engine operation. Consequently, the ion generator is operated to dispense the ion into passenger's room suitably in accordance with usage environment of the vehicle. As a result, it is possible to remove the odor and eliminate the bacteria of the passenger's room by using the ion generator.

Reference condition is obtained by vehicle information detected by a vehicle information detecting means which is equipped in the vehicle. Therefore, the controller includes a vehicle information input. The vehicle information input receives the vehicle information detected at the vehicle information detecting means equipped in the vehicle. The controller generates an operation start signal for starting the ion generator when the vehicle information received at the vehicle information input satisfies a predetermined condition. By using the vehicle information detecting means equipped in the vehicle, it is possible to obtain the ion generating system which is incorporated into vehicle easily and which is inexpensive.

The vehicle information input includes an ignition key detector which is provided for receiving a key signal indicating whether an ignition key is inserted or removed. The controller is configured to generate the operation start signal upon the ignition key detector detecting the signal indicative of that the ignition key is inserted. In this case, the ion generator is configured to be operated before the user starts running the vehicle with running the engine. Therefore, it is possible to remove the odor and sterilize the bacteria in the passenger's room by the ion generator before the user starts running the vehicle with running the engine. Or, the controller is configured to generate the operation start signal upon the ignition key detector detecting the signal indicative of that the ignition key is removed. This configuration enables the ion generator to be operated after the drive of the vehicle is stopped.

In addition to the above configuration, it is preferred that the ion generating system for use in a vehicle further includes a human detection sensor which is provided for detection of a human body around the vehicle. In this case, the vehicle information input includes a human detector which is configured to receive a signal from the human detection sensor. The controller is configured to generate the operation start signal upon the human detector receiving the signal indicative of the detecting the human body. This configuration enables the ion generator to operate in order to remove the odor and to sterilize the bacteria when the driver moves closer to the vehicle. Additionally, this configuration enables the ion generator to operate in order to remove the odor and to sterilize the bacteria when the driver gets inside the vehicle.

In addition to the above, it is preferred that the ion generating system for use in a vehicle in this invention further includes a human detection sensor for detection of a human body around the vehicle for operating the ion generator when the driver leaves from the vehicle. In this case, the vehicle information input includes a human detector which is configured to receive a signal from the human detection sensor, and an engine detector which is configured to receive an on-off signal which indicates whether or not the engine is running. The controller is configured to generate the operation start signal upon the human detector receiving no signal indicative of the detecting the human body within a predetermined time period after the engine detector detects that the engine is not running.

It is also preferred that the ion generating system for use in a vehicle further includes a concentration sensor which detects a concentration of a target substance such as an odor or allergen contained in a passenger's room. The vehicle information input comprises a concentration detector receiving a concentration signal from the concentration sensor, and a vehicle's battery detector which receives a battery signal indicating a battery power. The controller is configured to generate the operation start signal in response to the concentration detector receiving the concentration signal indicative of the concentration above a reference level, and generate an operation stop signal for stopping the ion generator when the battery detector receives the battery signal indicative of the battery power being below a predetermined value. This configuration enables the system to prevent the waste of the battery power.

Relating to the above, it is preferred that the controller is configured to recognize the completion of removing the odor and sterilizing the bacteria when the controller receives the concentration signal indicative of the concentration below the reference level. In this case, it is preferred that the controller is configured to generate the operation stop signal when the concentration detector receives the concentration signal indicative of the concentration below the reference level. With this configuration, the ion generator is stopped on the basis of the operation stop signal. Therefore, this configuration enables the system to prevent the waste of the battery power of the vehicle's battery.

Furthermore, it is preferred that the vehicle information input comprises a driving history memory and a driving time anticipator. The driving history memory is configured to store a past driving pattern of the vehicle. The driving time anticipator is configured to obtain a next anticipated drive start time from the past driving pattern in the driving history memory. The controller is configured to generate the operation start signal at a time preceding the next anticipated drive start time by a predetermined time period. This configuration enables the system to operate the ion generator in order to remove the odor and sterilize the bacteria just before the user starts running the vehicle.

Relating to the above, even after an elapse of a predetermined time from the expected time of starting the vehicle, there is a situation where the vehicle is not operated. Therefore, it is preferred that the system further comprises a protection means for stopping the operation of the ion generator such that the system prevents the waste of the battery power. To achieve the object, the vehicle information input comprises an engine detector receiving an on-off signal indicating whether or not engine is running. The controller is configured to stop the ion generator when the engine detector detects that the engine is not running after an elapse of a predetermined time from the time when the operation start signal is generated.

Furthermore in the case where the ion generator is configured to be operated at the same time as the engine running and to be operated during the engine operation, there is a situation where the vehicle is already started before the anticipated drive start time. Under this situation, it is preferred that an expected operation start signal on the basis of the expected operation start time is cancelled. To cancel the expected operation start signal, it is preferred that the vehicle information input comprises an engine detector which is configured to receive an on-off signal indicating whether or not the engine is running. The controller is configured to provide a signal of keeping the operation of the ion generator while the engine detector receives the signal indicating that the engine is running. The controller is configured to cancel a scheduled operation instruction of giving the operation start signal based upon the next anticipated drive start time when the engine detector receives the signal indicative of the engine being running at the expected operation start time.

It is also possible to incorporate an operation scheduler into the ion generating system in this invention. The operation scheduler is provided for setting an operation start time of starting the operation of the ion generator. In accordance with this configuration, the controller is configured to start the ion generator upon receiving an on signal issued from the operation scheduler at the operating start time. Consequently same as the above configuration, it is possible to operate the ion generator independent from the ignition switch. Therefore, it is possible to operate the ion generator to effectively remove the odor and sterilize the bacteria according to an intended status of use of the vehicle.

Relating to the above, the operation scheduler is configured to enter an operation stop time of stopping the operation of the ion generator. The controller is configured to stop the ion generator upon receiving an off signal issued from the operation scheduler at the operation stop time. In this case, it is possible for the user to select operation period of the ion generator at user's discretion. Therefore, it is possible to operate the ion generator to remove the odor and sterilize the bacteria effectively.

Furthermore, it is preferred that the controller includes a vehicle's battery detector which receives a battery signal indicating a battery power detected at the vehicle information detector. The controller is configured to stop the ion generator when the vehicle's battery detector judges that the detected battery power is blow a predetermined level. With this configuration, it is possible to prevent the waste of the vehicle's battery.

It is possible for the system to further comprise a display which is configured to display an operative time of the ion generator according to the vehicle's battery power. In this case, the controller includes a vehicle's battery detector which receives a battery signal indicating a battery power detected at the vehicle information detector. The controller includes an operation time evaluator which calculates an operable time of the ion generator based upon a current consumption of the ion generator and the detected battery power. The operable time is shown in the display.

Furthermore, it is preferred that the ion generating system for use in a vehicle further includes an alarm section. The controller includes a vehicle's battery detector which receives a battery signal indicating a battery power detected at the vehicle information detector. The controller includes an operation time evaluator which calculates an operable time of the ion generator based upon a current consumption of the ion generator and the detected battery power. The controller is configured to activate the alarm section to provide an alarm when the operable time is judged to end within the operation time set by the operation scheduler.

### BRIEF DESCRIPTION OF THE DRAWINGS

Fig. 1 is a schematic view which shows the ion generating system for use in the vehicle incorporated into the vehicle in this invention.
Fig.2 is a block diagram of the ion generating system for use in the vehicle in a preferred embodiment.
Fig. 3 is a cross-sectional view of the ion generator employed in the above system.
Fig. 4 is a block diagram of detailed particulars in the controller in the above system.
Fig. 5 (A) is a wave form which explains operation of the ion generator before start of the running in this system.
Fig. 5 (B) is a wave form which explains operation of the ion generator before start of the running in this system.
Fig. 6 is a plane view of the keyless entry switch applied to the above system.
Fig. 7 (A) is an explanation drawing showing a detection range of the human detection sensor employed in the above system.
Fig. 7 (B) is an explanation drawing showing a detection range of the human detection sensor employed in the above system.
Fig. 8 (A) is a wave form which explains the operation of the ion generator after finish driving in the above system
Fig. 8 (B) is a wave form which explains the operation of the ion generator after finish driving in the above system
Fig. 8 (C) is a wave form which explains the operation of the ion generator after finish driving in the above system
Fig. 9 is a wave form which explains the operation of the ion generator when the concentration sensor is employed in the above system.

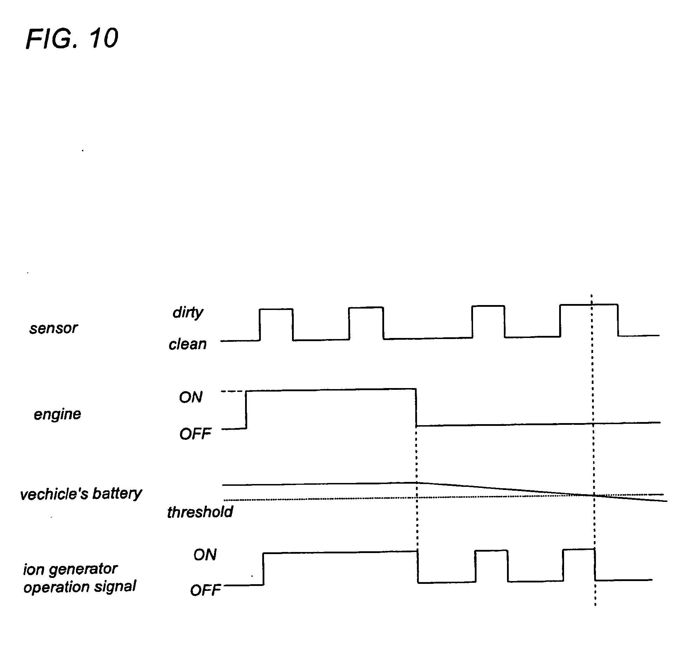

Fig. 10 is a wave form which explains the other operation of the ion generator when the concentration sensor is employed in the above system.
Fig. 11 is an explanation drawing which shows operation of the ion generator on the basis of a next operation time anticipating function in the above system.
Fig. 12 is a flow diagram which shows the operation of the ion generator on the basis of the next operation time anticipating function in the above system.
Fig. 13 is a schematic view of the input device used in setting schedule of the operation of the ion generator in the above system.
Fig. 14 is a wave form showing the operation of the ion generator on the basis of the operation scheduling function.

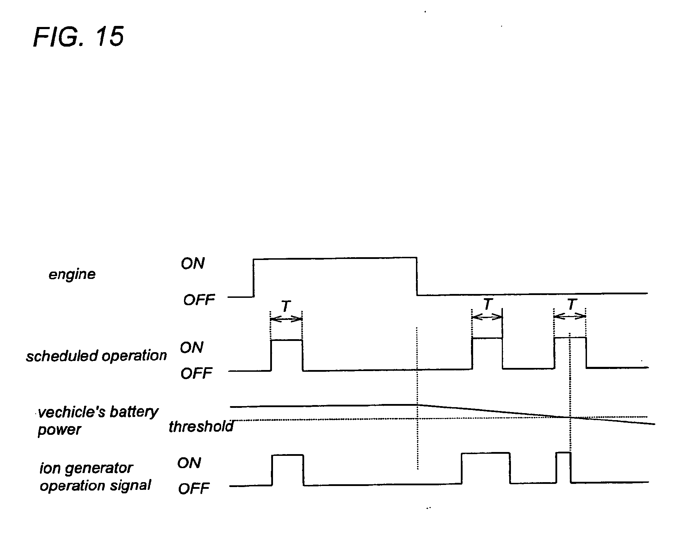

Fig. 15 is a wave form showing the other operation of the ion generator on the basis of the operation scheduling function.

### BEST MODE FOR CARRYING OUT THE INVENTION

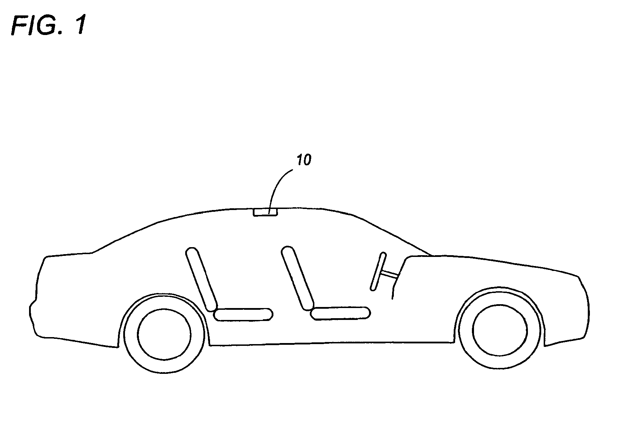

An ion generation system for using in the vehicle in this invention is provided for being incorporated into a vehicle. The ion generating system comprises an ion generator 10 and a controller 100. The controller 100 controls operation of the ion generator 10. The ion generator 10 is, for example, disposed on the ceiling of a vehicle interior shown in Fig. 1 to dispense ion to passenger's room. However, it is possible to dispose the ion generator at an air outlet of an air conditioner.

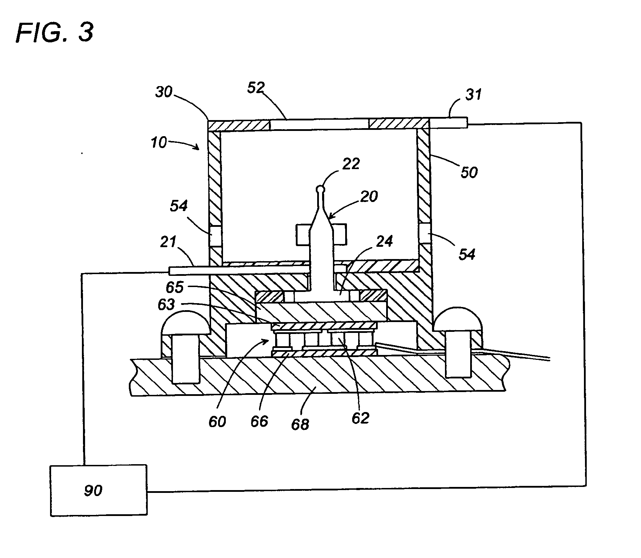

As shown in Fig. 3, the ion generator 10 comprises an emitter electrode 20, an opposed electrode 30, a heat exchanger 40, and an atomizing barrel 50. The atomizing barrel 50 is configured to hold the emitter electrode 20, the opposed electrode 30, and the heat exchanger 40. the emitter electrode 20 is disposed in the atomizing barrel and is aligned with an central axis of the atomizing barrel 50. The emitter electrode 20 has its rear end fixed to a bottom wall 51 of the atomizing barrel 50 and has its tip projected in the atomizing barrel 50. The opposed electrode 30 is formed into a ring-shape and is formed at its center portion with a circular window. The opposed electrode 30 is disposed to have a center portion of the circular window aligned along an axial direction of the atomizing barrel50. The opposed electrode 30 is spaced from an emitter end which is defined as a tip of the emitter electrode 20. The opposed electrode 30 and the emitter electrode 20 are disposed along the axial direction of the atomizing barrel 50. The circular window defines an outlet port of the atomizing barrel 50. The emitter electrode 20 and the opposed electrode 30 are respectively coupled to a high voltage source 90 through an electrode terminal 21 and a ground terminal 31. The high voltage source 90 includes a transformer and is configured to apply a predetermined high voltage between the emitter electrode 20 and the opposed electrode 30 which is grounded. The high voltage source is configured to apply negative voltage to generate a high voltage electric field between the emitter end 22 at the tip of the emitter electrode 20 and an inside circumference of the circular window of the opposed electrode 30. The negative voltage applied to the emitter electrode 20 is, for example, - 4.6 kV. As mentioned later, the high voltage source is configured to electrically charge water supplied onto the tip of the emitter electrode 20 so that the electrically charged water is dispensed as mist of charged minute water particles.

In this case, the water held at the emitter end 22 at the tip of the emitter electrode 20 receives Coulomb force generated by the high voltage applied between the emitter electrode 20 and the opposed electrode 30. The Coulomb force forms Taylor cone at the surface of the water held at the emitter end 22. Next, electrical charge is concentrated at the tip of the Taylor cone. According to the above, electrical field intensity at the tip of the Taylor cone is increased. As a result, the water held at the emitter end 22 receives a large Coulomb force, thereby the Coulomb force developing the Taylor cone. When the Coulomb force becomes larger than surface tension of the water W, the Taylor cone T is broken up repeatedly. This phenomenon is, so called Rayleigh breakup. According to the Rayleigh breakup, great quantity of the mist of the charged minute water particles of nanometer sizes are generated from the tip of the emitter end 22. The mist flows to the opposed electrode 30, and subsequently dispensed through the outlet port 52. The atomizing barrel 50 is formed at its peripheral wall with a plurality of air flow openings 54. Pressured air flowing through a plurality of air flow openings 54 carries the mist, thereby the mist is dispensed from the air outlet 52.

The heat exchanger composed of a Peltier effect thermoelectric module. The heat exchanger 60 is attached at the bottom wall of the atomizing barrel 50. The heat exchanger 60 has a cooling side and a radiating side. The cooling side of the heat exchanger is coupled to the emitter electrode20 for cooling the emitter electrode 20 below the dew point. The cooled emitter electrode 20 is configured to build up condensation from the air surrounding around the emitter electrode. The heat exchanger 60 is defined as a water supply means being configured to supply the water to the emitter electrode 20. The heat exchanger 60 includes a pair of conductive circuit board and a plurality of thermoelectric elements connected between a pair of the conductive circuit board. The heat exchanger 60 is configured to be applied a variable voltage from an outside control module which is not shown, and is configured to cool the emitter electrode 20 at a cooling rate determined by the variable voltage. One side of the conductive circuit board which acts as a cooling side is thermally coupled to a flange 24 at a rear of the emitter electrode through an electrically insulating member. Other side of the conductive circuit board which acts as a heat radiating side is thermally coupled to the heat radiating board 68 through an electrically insulating member. The heat radiating board 66 is fixed at the rear end of the atomizing barrel 50. The heat exchanger 60 is held between the heat radiating plate 66 and the bottom wall 51 of the atomizing barrel 50. Meanwhile, it is possible to attach a heat radiating fin to the heat radiating plate 66 for promoting heat radiation. A control module 200 controls the heat exchanger 60 in order to keep temperature of the emitter electrode to a suitable temperature according to ambient temperature and ambient moisture. In other word, the control module 200 controls the heat exchanger 60 in order to build up a sufficient condensation onto the emitter electrode. In addition, it is possible to employ different water supply means instead of the heat exchanger shown in the figure.

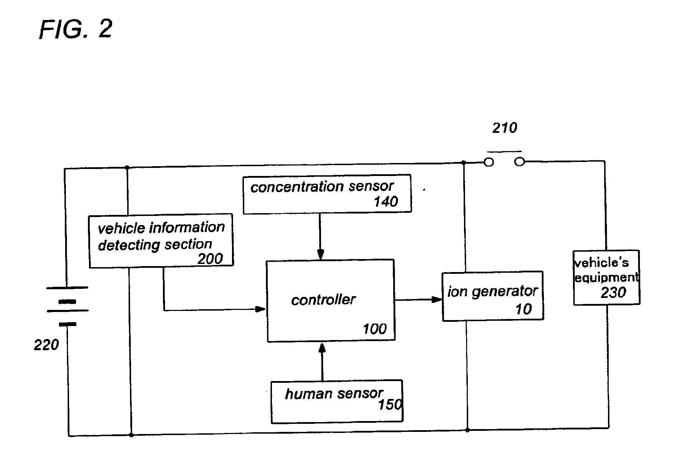

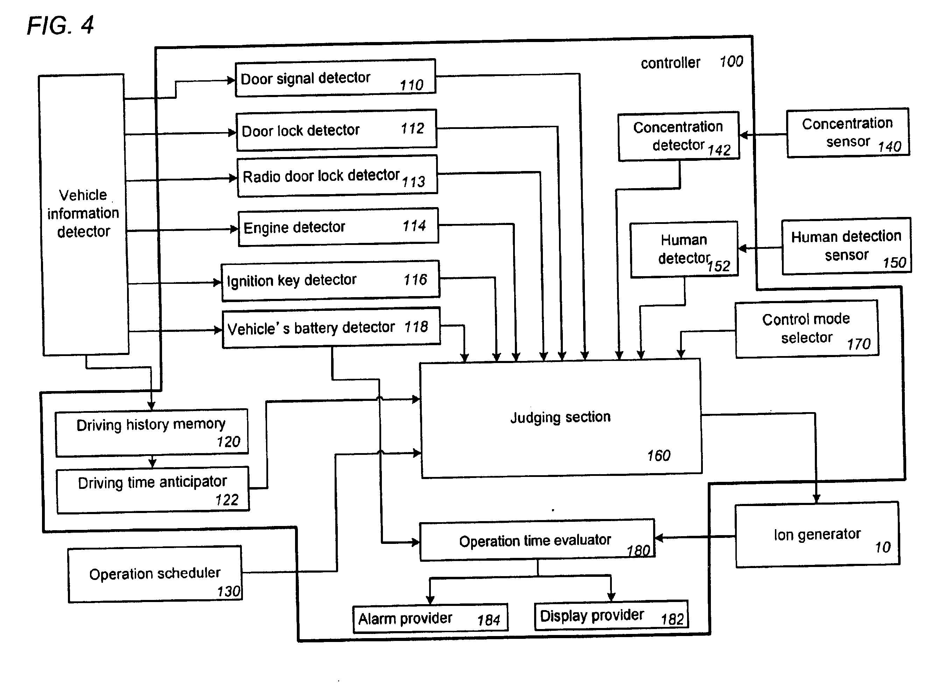

The ion generating system for using in a vehicle in this invention is configured to operate the ion generator on the basis of an output of the usage environment from a vehicle information detecting means. As shown in Fig. 2 and Fig. 4, the controller 100 controls the ion generator on the basis of a vehicle information output signal which is output from the vehicle information detecting means 200. The ion generator 10 and the controller 100 are connected to a vehicle's battery not through an ignition switch 21 for running the engine of the vehicle. Therefore, the ion generator 10 is configured to be operated when the engine is not running. That is, a vehicle installation device 230 such as radio and navigation system is connected to the vehicle's battery through the ignition switch 210. Therefore, the vehicle installation device 230 is configured to be operated when the engine is running. However, the ion generating system for using in a vehicle is directly connected to the vehicle's battery not through the ignition switch 210. Therefore, it is possible to operate the ion generating system independently from operation of the ignition switch 210. The engine referred in this invention indicates all of power sources for running the vehicle. Therefore, the engine referred in this invention includes internal combustion engines and electrical motors.

Vehicle information detecting means 200 is configured to output a door open/close signal, a door-lock signal, a key signal, an engine signal, and a battery signal. The open/close signal indicates an open and a close of the door. The door-lock signal indicates a locking of the door and an unlocking of the door. The key signal indicates an insertion of a key to the ignition switch 21, and a remove of the key from the ignition switch 210. The engine signal indicates a condition where the ignition switch is turned on and is turned off. That is, the engine signal indicates the condition where the engine is running or not running. The battery signal indicates battery power. In addition, the vehicle information detecting means 200 is configured to output a radio door lock signal when the vehicle information detecting means 200 is assembled into a vehicle being configured to control the locking and the unlocking of the door by a radio communication. Therefore, as shown in Fig. 4, the controller 100 comprises a door signal detector 110, a door lock detector 112, a radio door lock detector 113, an engine detector 114, an ignition key detector 116, and a vehicle's battery detector 118.

Furthermore, the vehicle information input of the controller 100 further comprises a driving history memory 120 which stores a past driving pattern of the engine on the basis of time information sent from the vehicle information detecting means 200. The controller 100 is provided with a driving time anticipator 122 which anticipates a next anticipated drive start time from the past driving pattern in the driving history memory. Signals sent from each of the detectors and the driving time anticipator are sent to a judging section 160. When the judging section 160 judges that a certain condition is satisfied, the judging section 160 sends either an operation start signal for starting the ion generator 10 or an operation stop signal for stopping the ion generator. In this way, the controller controls the operation of the ion generator 10.

Furthermore, this system further comprises an operation scheduler 130 for setting an operation time of the ion generator 10. The judging section 160 is configured to output the operation start signal and the operation stop signal on the basis of information including an operation start time or an operation stop time in the operation scheduler 130.

Furthermore, this system further comprises a concentration sensor 140 and a human detection sensor 150. The concentration sensor 140 is configured to detect causative substances of an odor or allergen contained in a passenger's room. The human detection sensor 150 is configured to detect the human around the vehicle and in the vehicle. Corresponding to these configurations, the controller 100 further comprises a concentration detector 142 and a human detector 152. The concentration detector 142 is configured to detect a concentration signal from the concentration sensor 140. The human detector 152 is configured to detect a human detection signal from the human detection sensor 150. The concentration detector 142 and the human detector 152 are configured to send a detection result to the judging section 160. The judging section 160 generates the operation start signal and the operation stop signal on the basis of the detection result including a concentration information and a presence information of the human.

The controller 100 is provided with a control mode selector 170. The control mode selector 170 determines a control mode of either the ion generator 10 starts or stops according to judgmental standards. The judgmental standards is any one of a signal indicating the detection result from the vehicle information detecting means 200, the operation start signal or the operation stop signal from the operation scheduler 130, the concentration signal from the concentration sensor 140, or a human detection signal from the human detection sensor 150. Alternatively, the judgmental standards is a combination of previously described signals.

Now, typical control modes are explained. First, a control mode that the ion generator 10 is operated before the vehicle is driven is explained.

### A-1) CONTROL MODE ON THE BASIS OF DOOR OPEN/CLOSE SIGNAL

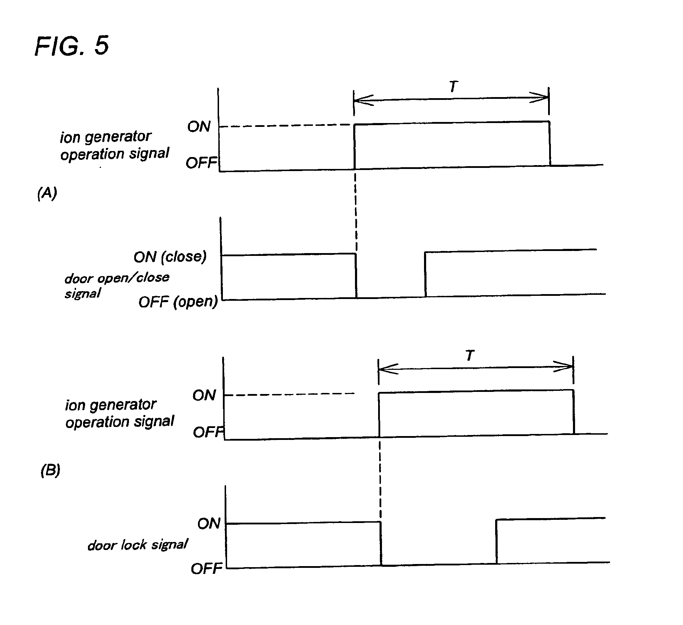

When at least one of the doors is opened by the user for using the vehicle, the door open/close signal changes from an off status to an on status. The door signal detector 110 detects this signal change. On the basis of the detection of the door signal detector 110, the judging section 160 generates the operation start signal. Subsequently, as shown in Fig. 5 (A), the judging section 160 generates the operation stop signal after a lapse of predetermined time T.

### A-2) CONTROL MODE ON THE BASIS OF THE DOOR LOCK SIGNAL

When the user unlocks the vehicle's door for using the vehicle, the door lock signal changes from the on status to the off status. The door lock detector 112 detects this signal change. When the door lock detector 112 detects the signal change, the judging section 160 generates the operation start signal. Subsequently, as shown in Fig. 5 (B), the judging section 160 generates the operation stop signal after a lapse of predetermined time T.

### A-3) CONTROL MODE ON THE BASIS OF A RADIO SIGNAL OF LOCKING AND UNLOCKING

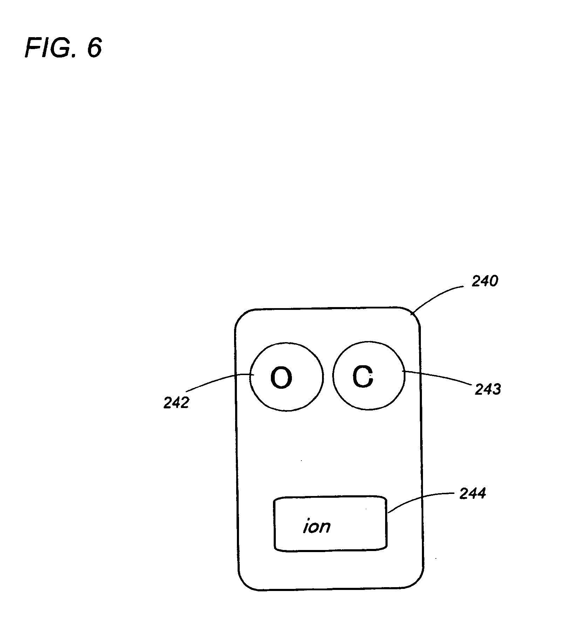

This control mode is used in the case where the door is unlocked by a radio signal which is sent according to result that an open button 242 of a remote switch 240 is pressed. Fig. 6 shows the remote switch 240. When the radio door lock detector 113 receives the radio signal of unlocking a vehicle's door, the judging section 160 sends a signal which is same as the signal shown in Fig. 5 (B). Relating to this configuration, it is possible to employ a remote switch 240 which further comprises an ion button 244. In this case, the controller is configured to start operating the ion generator 10 when receiving the radio signal which is sent on the basis of the result that the ion button 244 is pressed.

### A-4) CONTROL MODE ON THE BASIS OF SIGNAL INDICATIVE OF THAT THE KEY IS INSERTED INTO IGNITION SWITCH

When the user inserts the key into the ignition switch for using the vehicle, a signal which indicates that the key is inserted into ignition switch is generated. The signal is detected by an ignition key detector 116. When the ignition key detector 116 detects the signal, the judging section 160 generates the operation start signal. Then, the judging section 160 generates the operation stop signal after a lapse of predetermined time T.

### A-5) CONTROL MODE ON THE BASIS OF HUMAN DETECTION SIGNAL

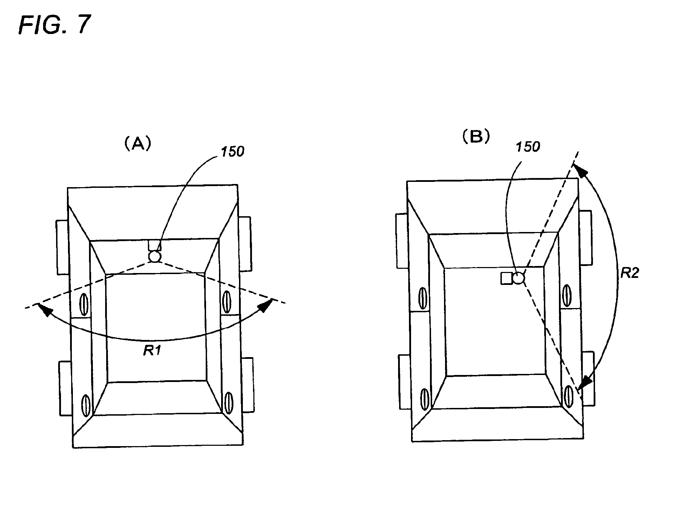

When the user comes close to the vehicle in order to use the vehicle, the human detection sensor 150 generates the human detection signal to the human detector 152. The judging section 160 generates the operation start signal when the judging section 160 receives the human detection signal. Subsequently, the judging section 160 generates the operation stop signal after a lapse of predetermined time T. As shown in Fig. 7 (A), the human detection sensor 150 is disposed at a center of a front side of the vehicle such that the human detection sensor 150 detects the human located in a range R1 of right and left side of the vehicle. Or, as shown in Fig. 7 (B), the human detection sensor 150 is disposed at a position near a driver's seat side such that the human detection sensor detects the human being located in a range R2 of right side of the door of the driver's seat.

Meanwhile, in the above control modes, the ion generator 10 is controlled such that the ion generator 10 is stopped after a lapse of predetermined time T from the start operation of the ion generator. However, this invention is not limited to this operation. It is possible to use the judging section 160 which is configured to keep operating the ion generator 10 until the engine stops in the case where the engine detector 114 detects the starting of the engine of the vehicle within the predetermined time T. It is also possible to use the judging section 160 which is configured to keep operating the ion generator 10 over an arbitrary extended period of time in the case where the engine detector 114 detects the starting of the engine of the vehicle within the predetermined time T

Furthermore, it is preferred that the judging section 160 is configured to generate the operation stop signal and to stop operating the ion generator 10 in the case where the battery power which is detected by the vehicle's battery detector 118 in the predetermined time T is below a threshold value.

Next, a control mode about the operation of the ion generator after the drive of the vehicle is explained.

### B-1) CONTROL MODE ON THE BASIS OF DOOR OPEN/CLOSE SIGNAL

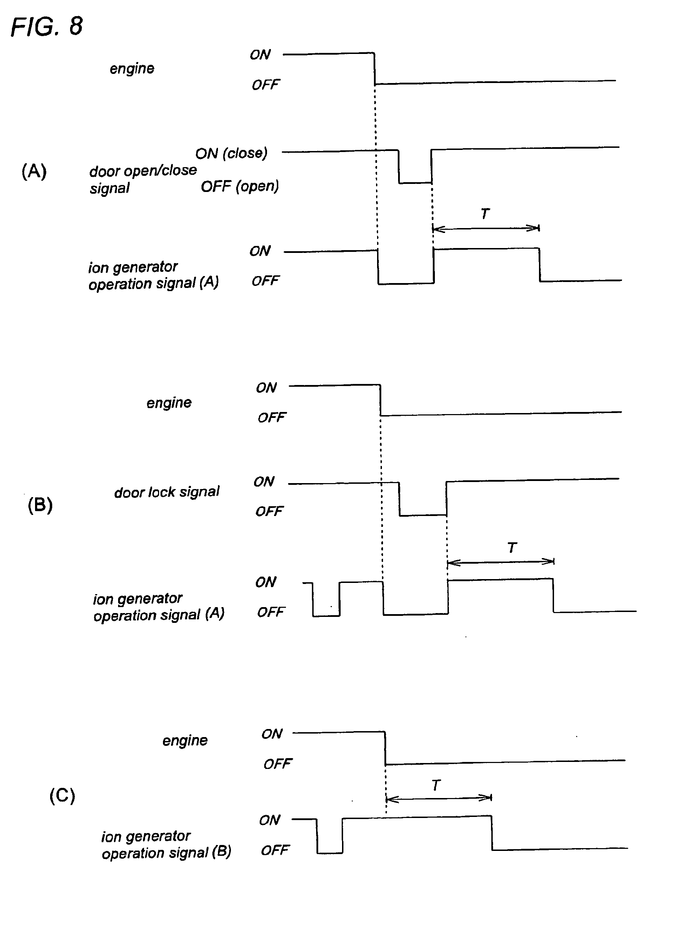

When the engine stops after the drive of the vehicle, the engine detector 114 detects that the engine is not running. When the door is opened and subsequently is closed, the door signal detector 110 detects a change from the door signal which indicates an open condition of the door to the signal which indicates a closed condition of the door. In the case where the ion generator 10 is operated during the running of the engine, the judging section 160 detects the stop of the engine and subsequently stops the operation of the ion generation 10. On the other hand, in the case where the ion generator 10 is not operated during the running of the engine, the judging section 160 keeps stopping the ion generator 10. Next, the judging section 160 sends the operation start signal to the ion generator 10 on the basis of the detection of the door signal shown in Fig. 8 (A). Then, the judging section 160 sends the operation stop signal after a lapse of predetermined time T. Consequently, the ion generator 10 is operated in the predetermined time after the drive of the vehicle. Therefore, it is possible to remove the odor and sterilize the bacteria in the vehicle.

### B-2) CONTROL MODE ON THE BASIS OF DOOR LOCK SIGNAL

When the drive is finished and the engine is stopped, the engine detector 114 detects that the engine is not running. When the door is locked after the passenger leaves from the car, the door lock detector 112 detects the door-lock signal which changes from off-state to on-state. In the case where the ion generator is operated during the running of the engine, the judging section 160 stops the ion generator 10 on the basis of the detection that the engine is not running. Next, the judging section 160 generates the operation start signal on the basis of the detection of the door-lock signal, and subsequently generates the operation stop signal after a lapse of predetermined time T shown in Fig. 8 (B). Next, the judging section 160 generates the operation start signal on the basis of the detection of the door-lock signal, and subsequently the judging section 160 generates the operation stop signal after a lapse of predetermined time T shown in Fig. 8 (B). It is noted that Fig. 8 (B) shows that the operation of the ion generator 10 is stopped during the engine operation. This is, as mentioned later, caused by the control of the ion generator on the basis of the other condition such as the environment of the vehicle interior.

### B-3) CONTROL MODE ON THE BASIS OF ENGINE STOP SIGNAL

As shown in Fig. 8 (C), when the engine detector 114 detects that the engine is not running, the judging section 160 generates the operation start signal. In the case where the ion generator 10 is operated during the running of the engine, the judging section 160 keeps operating the ion generator 10 over a period of a time T after the engine is stopped. In the case where the ion generator 10 is not operated during the running of the engine, the judging section 160 operates the ion generator 10 over a period of the time T after the engine is stopped.

### B-4) CONTROL MODE ON THE BASIS OF RADIO SIGNAL OF LOCKING AND UNLOCKING

This control mode is used in a case where the door is locked on the basis of the radio signal which is sent by means of pressing a close button 243 of the remote switch 240 shown in Fig. 6. When the radio door lock detector 113 detects a lock signal of the door, the judging section 160 operates the ion generator 10 such that the ion generator 10 operates same as the operation shown in Fig. 8 (B). Relating to the above, it is also possible to use the controller 100 which is configured to start operating the ion generator 10 at a time when the radio signal is sent by means of pressing the ion button 244 of the remote switch 240.

### B-5) CONTROL MODE ON THE BASIS OF SIGNAL WHEN THE KEY IS TAKEN OUT FROM IGNITION SWITCH

When the user takes the key from the ignition switch after the drive of the vehicle, a key take signal is detected by the ignition key detector 116. When the ignition key detector 116 receives the key take signal, the judging section 160 generates the operation start signal. Then the judging section 160 generates the operation stop signal after a lapse of predetermined time since the operation start signal is generated. Consequently, the ion generator 10 is operated over a period of the predetermined time T after the drive of the vehicle.

### B-6) CONTROL MODE ON THE BASIS OF HUMAN DETECTION SIGNAL

When the user leaves from the vehicle after the drive, the human detection sensor 150 shown in Fig. 7 (A) and Fig. 7 (B) generates the human detection signal which indicates that there is no passenger, and the human detection sensor sends the human detection signal to the human detector 152. When the human detector 152 receives the human detection signal within a predetermined time period after the engine is stopped, the judging section 160 generates the operation start signal. Subsequently, the judging section 160 generates the operation stop signal after a lapse of predetermined time T. In this way, the ion generator 10 is operated over a period of the predetermined time T after the drive of the vehicle.

### C-1) CONTROL MODE ON THE BASIS OF ENVIRONMENT OF PASSENGER'S ROOM

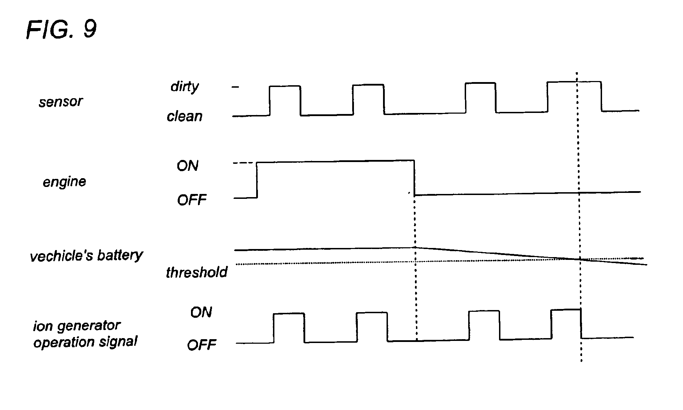

In this control mode, the concentration sensor 140 which is configured to detect concentration of a target substance such as an odor or allergen in a passenger's room is used. Therefore, the ion generator 10 is operated in the driving of the vehicle with using the concentration sensor 140 or is operated after the drive of the vehicle with using the concentration sensor 140. Fig. 9 shows the operation of the ion generator 10 which runs in this control mode. The ion generator 10 is only operated when the concentration signal sent from the concentration sensor 140 to the concentration detector 142 exceeds a predetermined reference level. Furthermore, in this control mode, the vehicle's battery detector 118 is configured to detect the battery power. The battery power of the vehicle's battery is used by the ion generator 10 operated after the drive. However, in this control mode having the vehicle's battery detector, when the battery power is below a predetermined threshold value, the ion generator 10 is stopped. Therefore, it is possible to prevent the battery power from consuming due to the use of the ion generator 10. In the control mode of using the concentration sensor, it is possible to control the ion generator which is controlled to be operated during the running of the engine, and is controlled on the basis of the concentration signal after the drive of the vehicle.

### D-1) CONTROL MODE ON THE BASIS OF EXPECTED TIME OF STARTING THE VEHICLE.

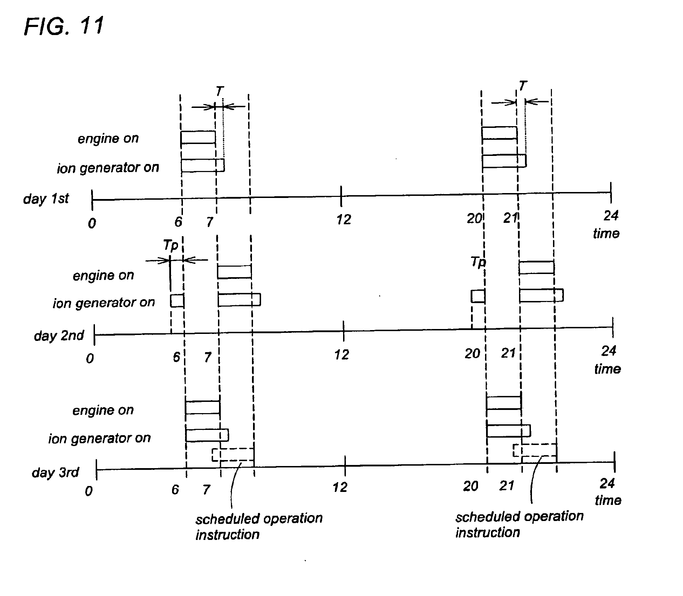

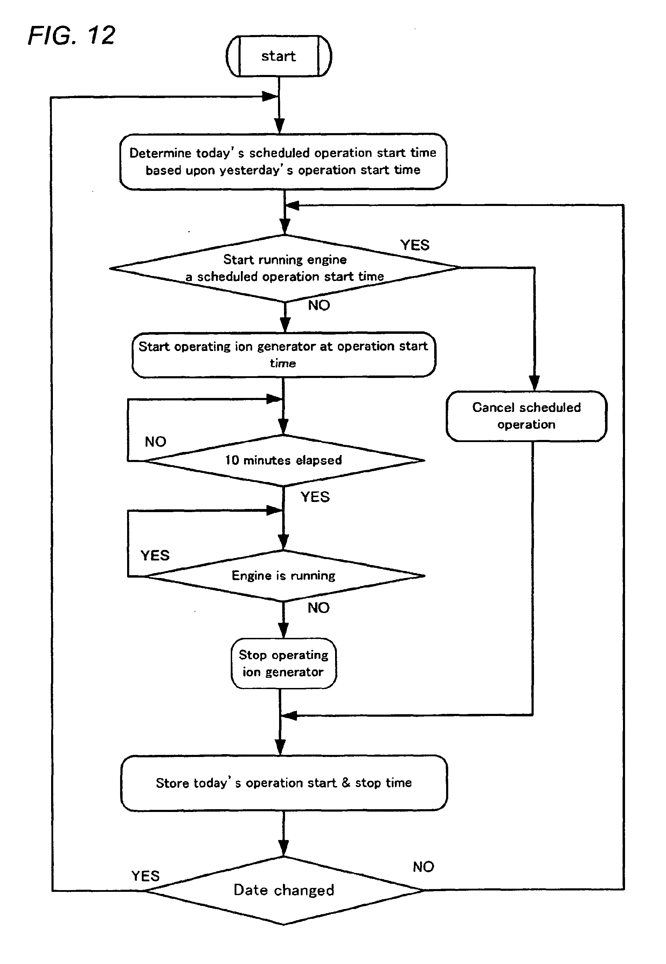

In this control mode, the driving history memory 120 stores on-off information of the engine obtained from the vehicle information detecting means 200. The on-off information is stored in relation to time and date. The driving time anticipator 122 calculates the expected time of starting the vehicle on the basis of a past driving history. The judging section 160 generates the operation start signal before the expected time of starting the vehicle. For example, the judging section 160 generates the operation start signal from 10 minutes before the expected time of starting the vehicle. Therefore, the ion generator is operated before the expected time of starting the vehicle. In this control mode, it is necessary that the ion generator 10 is always operated when the engine is running. Or in this control mode, it is necessary that the on-off control of the ion generator 10 is controlled on the basis of the concentration detected by the concentration sensor 140, and the ion generator is configured to be operated within the predetermined time T from the time when the engine is stopped. Operation in this control mode is explained with using Fig. 11. Day 1 st in Fig. 11 shows a case where the vehicle is operated from 6:00 to 7:00 and 20:00 to 21:00. In this case, this driving history is stored in the driving history memory 120. The driving time anticipator 122 anticipates that the vehicle will be used from 6:00 and 20:00. Therefore, on the basis of the expected time of the driving time anticipator 122, the driving time anticipator 122 sets the operation start time when the ion generator 10 is started such that the ion generator 10 is started at the 5:50 and 19:50. On the basis of the operation start time, the ion generator 10 is operated over a predetermined period Tp. In the case of Fig. 11, the ion generator 10 is operated over 10 minutes. In day 2nd, in a case where the vehicle is operated from 7:00 AM to 8:00 AM and from 21:00 PM to 22:00 PM, the driving time anticipator 122 anticipates that the vehicle will be used from 7:00 AM and from 21:00 PM. Therefore, on the basis of the expected time of the driving time anticipator 122, the driving time anticipator 122 sets the operation start time that the ion generator 10 is started such that the ion generator 10 is started at the 6:50 AM and 20:50 AM. On the basis of the operation start time, the judging section 160 controls the ion generator 10 to start from 6:50 AM and 20:50 PM for 10 minutes. In day 3rd, in a case where the vehicle is operated before 10 minutes from the expected time of starting the vehicle, scheduled operation instruction for operating the ion generator 10 on the basis of the expected time of starting the vehicle is cancelled. For more detail, as shown in Fig. 11, in a case where the vehicle is operated at 6:00 AM or 20:00 PM, the scheduled operation instruction for operating the ion generator 10 on the basis of the expected time of starting the vehicle is cancelled. It is noted that period of time drawn by broken lines in Fig. 11 shows the scheduled operation instruction of the ion generator 10. As a result, the ion generator 10 is configured to be operated for the predetermined period T from the stop of the engine, and the ion generator 10 is configured to be stopped after the predetermined time from the stop of the engine. Fig. 12 is a flow diagram for explaining the above operation. As shown in Fig. 12, the driving history memory 120 stores the driving history of the day every day. On the basis of the driving history of previous day, the ion generator 10 is operated by the judging section 160.

It is noted that the above explanation discloses the example of determining the expected time of starting the vehicle on the basis of the time of starting the vehicle of the previous day. However, the explanation is a type of an example for easily understanding this invention. It is preferred that the driving time anticipator is configured to determine an expected time of starting the vehicle of holiday which is different from an expected time of starting the vehicle of weekday. That is, in a case where the next day is weekday, it is preferred that the driving time anticipator is configured to determine the expected time of starting the vehicle on the basis of the driving history of the past weekday. Similarly, in a case where the next day is holiday, it is preferred that the driving time anticipator is configured to determine the expected time of starting the vehicle on the basis of the driving history of the past holiday. In these cases, it is more preferred that the driving history memory is configured to store weekly driving histories or to store more than weekly driving histories. With this configuration, the driving time anticipator is configured to recognize weekday information of the driving histories on the basis of many driving history having same operation start times. On the other hand, the driving time anticipator is configured to recognize holyday information which is not recognized as the weekday information. Consequently, there is no need for setting the weekday or the holiday in advance.

### E-1) CONTROL MODE ON THE BASIS OF THE OPERTION SCHEDULE SET BY THE USER

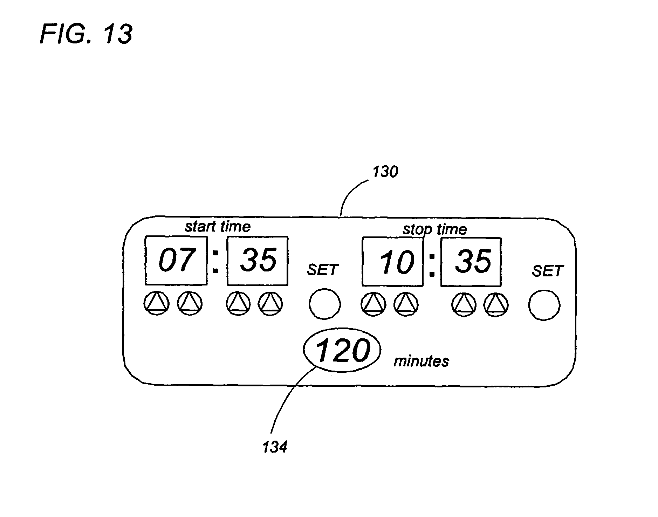

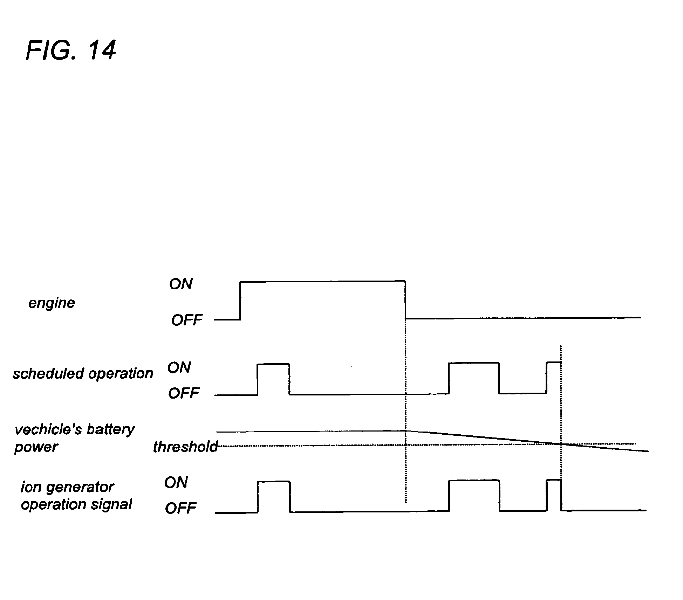

In this control mode, the ion generator 10 is controlled on the basis of the operation start time and the operation stop time input by using the operation scheduler 130 which is illustrated in Fig. 13. The operation scheduler 130 is configured to be set the operation start time and the operation stop time. The time information set to the operation scheduler 130 is sent to the judging section 160. On the basis of the time information, the judging section 160 determines the operation schedule and sends the operation start signal ON and the operation stop signal OFF to the ion generator 10. In this way, as shown in Fig. 14, the judging section 160 controls the ion generator 10. In this control mode, the vehicle's battery detector 118 detects the battery power of the vehicle's battery. When the ion generator 10 is operated in a condition where the engine is not running, the ion generator 10 uses the battery power of the vehicle's battery. When the battery power of the vehicle's battery is below the threshold value, the ion generator 10 is stopped to prevent the waste of the vehicle's battery. Meanwhile, the above example shows that the ion generator 10 is operated on the basis of the operation start time and operation stop time. However, it is possible to operate the ion generator a predetermined period T from the operation start time.

In this system, it is necessary to consider that the ion generator 10 is operated in a condition where the engine is not running. That is, it is necessary to consider that the ion generator 10 is operated in a condition where the vehicle's battery is not charged. Therefore, there is a possibility that a remaining battery level reaches a level which is not sufficient to start operating the engine. In addition, there is a possibility that the remaining battery level decreases to the level which is not sufficient to start operating the engine due to the operation of the ion generator. Therefore, the ion generating system in this invention further includes an alarm section which is configured to alarm that the battery's level decreases to the level which is not sufficient to start the engine. For this purpose, the controller 100 is provided with an operation time evaluator 180. The operation time evaluator 180 is configured to compare an electrical power consumption of the ion generator 10 to the remaining battery level of the vehicle's battery 220. On the basis of the result, the operation time evaluator 180 calculates the operable time of the ion generator 10 from when the ion generator 10 is started till when the battery level reaches to the threshold value. Display provider 182 generates a display data on the basis of the operable time, and sends the display data to a display. As the display, it is possible to use the display window 134 shown in Fig. 13. In addition, it is possible to use a display arranged in the vehicle's interior as the display.

Furthermore, when the operation time evaluator 180 expects that the battery level decreases lower than the threshold value before the operation stop time set by the controller 100 in the case where the ion generator 10 is used, the alarm provider 184 generates sound to the user and the alarm display by the light, and send the sound and the light to the alarm section. Speakers, buzzers, and the lighting means are used as the alarm section. In this way, the alarm is sent to the users.

In above embodiment, the ion generator 10 is controlled by the output of the vehicle information detecting means 200. However, in the case where one or more detection subject is not able to use, means which is configured to detect prescribed detection subject is added. For example, in the case where the vehicle information detecting means 200 does not include function of detecting the battery power, means which is configured to detect voltage and current of the vehicle's battery is added. The vehicle's battery is calculated on the basis of the output from the means.

In addition, the configuration of the controller 100 shown in Fig. 4 is disclosed in order to easily understand various basic control modes in this invention. However, in a case where the controller 100 is controlled on the basis of the limited detection subject, it is possible to reject using the needless detection section and the control mode selector 170.

## Claims

1. An ion generating system for use in a vehicle, said system comprising an ion generator (10) configured to be energized by a vehicle's power source to dispense ions into a passenger's room, and a controller (100) configured to start operating said ion generator upon seeing that a certain condition is satisfied,
wherein said controller includes a vehicle information input (110, 112, 113, 114, 116, 118, 120) which receives vehicle information detected at a vehicle information detecting means (200) equipped in the vehicle,
said controller generating an operation start signal for starting said ion generator when said vehicle information received at said vehicle information input satisfies a predetermined condition, **characterised in that**
said vehicle information input includes an ignition key detector (116) for receiving a key signal indicating whether an ignition key is inserted or removed, said controller being configured to generate said operation start signal upon said ignition key detector detecting the signal indicative of that the ignition key is inserted or removed.

2. An ion generating system for use in a vehicle as set forth in claim 1, further including a human detection sensor (150) for detection of a human body around the vehicle,
said vehicle information input including a human detector (152) receiving a signal from said human detection sensor, said controller being configured to generate said operation start signal upon said human detector receiving the signal indicative of the detecting the human body.

3. An ion generating system for use in a vehicle as set forth in claim 1, further including a human detection sensor (150) for detection of a human body around the vehicle,
said vehicle information input including a human detector (152) receiving a signal from said human detection sensor, and an engine detector (114) receiving an on-off signal indicating whether or not the engine is running,
said controller being configured to generate said operation start signal upon said human detector receiving no signal indicative of the detecting the human body within a predetermined time period after said engine detector detects that the engine is not running.

4. An ion generating system for use in a vehicle as set forth in claim 1, further including a concentration sensor (140) which detects a concentration of a target substance such as an odor or allergen contained in a passenger's room,
said vehicle information input comprising a concentration detector (142) receiving a concentration signal from said concentration sensor, and a vehicle's battery detector (118) receiving a battery signal indicating a battery power,
said controller being configured to generate said operation start signal in response to said concentration detector receiving the concentration signal indicative of the concentration above a reference level, and generate an operation stop signal for stopping said ion generator when said battery detector receives the battery signal indicative of the battery power being below a predetermined value.

5. An ion generating system for use in a vehicle as set forth in claim 4, wherein
said controller is configured to generate said operation stop signal when said concentration detector receives the concentration signal indicative of the concentration below said reference level.

6. An ion generating system for use in a vehicle as set forth in claim 1, wherein
said vehicle information input comprises a driving history memory (120) which stores a past driving pattern of the vehicle, and a driving time anticipator (122) which obtains a next anticipated drive start time from said past driving pattern in said driving history memory,
said controller being configured to generate said operation start signal at a time preceding said next anticipated drive start time by a predetermined time period.

7. An ion generating system for use in a vehicle as set forth in claim 6, wherein
said vehicle information input comprises an engine detector (114) receiving an on-off signal indicating whether or not the engine is running,
said controller being configured to stop said ion generator when said engine detector detects that the engine is not running after an elapse of a predetermined time from the time when said operation start signal is generated.

8. An ion generating system for use in a vehicle as set forth in claim 6, wherein
said vehicle information input comprises an engine detector (114) receiving an on-off signal indicating whether or not the engine is running,
said controller being configured to provide a signal of keeping the operation of said ion generator while said engine detector receiving the signal indicating that the engine is running,
said controller being configured to cancel a scheduled operation instruction of giving the operation start signal based upon the next anticipated drive start time when said engine detector receives the signal indicative of the engine being running at said expected operation start time.

9. An ion generating system for use in a vehicle as set forth in claim 1, further including:
an operation scheduler (130) for setting an operation start time of starting the operation of said ion generator,
said controller being configured to start said ion generator upon receiving an on signal issued from said operation scheduler at said operating start time.

10. An ion generating system for use in a vehicle as set forth in claim 9, wherein
said operation scheduler is configured to enter an operation stop time of stopping the operation of said ion generator,
said controller being configured to stop said ion generator upon receiving an off signal issued from said operation scheduler at said operation stop time.

11. An ion generating system for use in a vehicle as set forth in claim 9, wherein
said controller includes a vehicle's battery detector (118) receiving a battery signal indicating a battery power detected at said vehicle information detector,
said controller being configured to stop said ion generator when said vehicle's battery detector judges that the detected battery power is below a predetermined level.

12. An ion generating system for use in a vehicle as set forth in claim 9, further including a display,
said controller including a vehicle's battery detector (118) receiving a battery signal indicating a battery power detected at said vehicle information detector,
said controller including an operation time evaluator (180) which calculates an operable time of said ion generator based upon a current consumption of said ion generator and the detected battery power, said operable time being shown in said display.

13. An ion generating system for use in a vehicle as set forth in claim 9, further including an alarm section,
said controller including a vehicle's battery detector (118) receiving a battery signal indicating a battery power detected at said vehicle information detector (200),
said controller including an operation time evaluator (180) which calculates an operable time of said ion generator based upon a current consumption of said ion generator and the detected battery power, and
said controller being configured to activate said alarm section to provide an alarm when said operable time is judged to end within the operation time set by said operation scheduler.

## Patentansprüche

1. Ein Ionen-Erzeugungssystem zur Verwendung in einem Fahrzeug, wobei das System einen Ionengenerator (10) umfasst, der dazu eingerichtet ist, durch eine Fahrzeugstromquelle mit Energie versorgt zu werden, um Ionen in eine Fahrgastraum abzugeben,
und eine Steuerung (100), die dazu eingerichtet ist, auf ein Erkennen des Eintretens einer bestimmten Bedingung hin den Betrieb des Ionengenerators zu starten,
wobei die genannte Steuerung einen Fahrzeuginformationseingang (110, 112, 113, 114, 116, 118, 120) umfasst, der Fahrzeuginformation empfängt, die von einer Fahrzeuginformations-Detektoreinrichtung (200) erfasst wurde, mit der das Fahrzeug ausgestattet ist,
wobei die genannte Steuerung ein Betriebsstart-Signal zum Starten des genannten Ionengenerators erzeugt, wenn die genannte, am Fahrzeuginformationseingang empfangene Fahrzeuginformation eine vorbestimmte Bedingung verfüllt,
**dadurch gekennzeichnet, dass**
der genannte Fahrzeuginformationseingang einen Zündschlüsseldetektor (116) zum Empfangen eines Schlüssel-Signals umfasst, das angibt, ob ein Zündschlüssel eingesteckt oder entfernt wird,
wobei die genannte Steuerung dazu eingerichtet ist, das Betriebsstart-Signal dann zu erzeugen, wenn der Zündschlüsseldetektor das Signal erfasst, das anzeigt, dass der Zündschlüssel eingesteckt oder entfernt wird.

2. Ein Ionen-Erzeugungssystem zur Verwendung in einem Fahrzeug gemäß Anspruch 1, das ferner zum Erfassen eines menschlichen Körpers um das Fahrzeug herum einen Personendetektionssensor (150) aufweist,
wobei der genannte Fahrzeuginformationseingang einen Personendetektor (152) umfasst, der ein Signal von dem genannten Personendetektionssensor empfängt, wobei die Steuerung eingerichtet ist, das genannte Betriebsstart-Signal dann zu erzeugen, wenn der Personendetektor das Signal erfasst, das das Erfassen eines menschlichen Körpers anzeigt.

3. Ein Ionen-Erzeugungssystem zur Verwendung in einem Fahrzeug gemäß Anspruch 1, das ferner zum Erfassen eines menschlichen Körpers um das Fahrzeug herum einen Personendetektionssensor (150) aufweist,
wobei der genannte Fahrzeuginformationseingang einen Personendetektor (152) umfasst, der ein Signal von dem genannten Personendetektionssensor empfängt, und einen Motordetektor (114), der ein An-Aus-Signal empfängt, das angibt, ob der Motor läuft oder nicht,
wobei die Steuerung eingerichtet ist, das genannte Betriebsstart-Signal darauf hin zu erzeugen, dass innerhalb eines vorbestimmten Zeitintervalls, nachdem der Motordetektor erfasst, dass der Motor nicht läuft, der Personendetektor kein Signal empfängt, das das Erfassen eines menschlichen Körpers anzeigt.

4. Ein Ionen-Erzeugungssystem zur Verwendung in einem Fahrzeug gemäß Anspruch 1, das ferner einen Konzentrationssensor (140) umfasst, der eine Konzentration einer Soll-Substanz wie eines Geruchs oder eines Allergens in einem Fahrgastraum erfasst,
wobei der genannte Fahrzeuginformationseingang einen Konzentrationsdetektor (142) umfasst, der ein Konzentrationssignal von dem genannten Konzentrationssensor empfängt, und einen Fahrzeugbatteriedetektor (118), der ein Batteriesignal empfängt, das eine Batteriestärke angibt,
wobei die Steuerung eingerichtet ist, das genannte Betriebsstart-Signal darauf hin zu erzeugen, dass der genannte Konzentrationsdetektor das Konzentrationssignal empfängt, das anzeigt, dass die Konzentration oberhalb eines Bezugsniveaus liegt, und ein Betriebsstopp-Signal zum Anhalten des Ionengenerators, wenn der genannte Batteriesensor das Batteriesignal empfängt, das anzeigt, dass die Batteriestärke unterhalb eines vorbestimmten Wertes liegt.

5. Ein Ionen-Erzeugungssystem zur Verwendung in einem Fahrzeug gemäß Anspruch 4,
wobei die Steuerung eingerichtet ist, das genannte Betriebsstopp-Signal dann zu erzeugen, wenn der genannte Konzentrationsdetektor das Konzentrationssignal empfängt, das anzeigt, dass die Konzentration unterhalb des genannten Bezugsniveaus liegt.

6. Ein Ionen-Erzeugungssystem zur Verwendung in einem Fahrzeug gemäß Anspruch 1,
wobei der genannte Fahrzeuginformationseingang einen Fahrtenverlaufsspeicher (120) aufweist, der eine frühere Fahrtenstruktur des Fahrzeugs speichert, und eine Fahrtzeit-Vorhersageeinheit (122), die aus der genannten früheren Fahrtenstruktur in dem genannten Fahrtenverlaufsspeicher eine nächste erwartete Fahrbeginnzeit erhält,
wobei die Steuerung eingerichtet ist, das genannte Betriebsstart-Signal zu einer Zeit zu erzeugen, die der nächsten erwarteten Fahrbeginnzeit um ein vorbestimmtes Zeitintervall vorausgeht.

7. Ein Ionen-Erzeugungssystem zur Verwendung in einem Fahrzeug gemäß Anspruch 6,
wobei der genannte Fahrzeuginformationseingang einen Motordetektor (114) umfasst, der ein An-Aus-Signal empfängt, das angibt, ob der Motor läuft oder nicht,
wobei die Steuerung eingerichtet ist, den Ionengenerator anzuhalten, wenn der genannte Motordetektor nach Ablauf einer vorbestimmten Zeit ab dem Zeitpunkt, zu dem das Betriebsstart-Signal erzeugt wurde, erfasst, dass der Motor nicht läuft.

8. Ein Ionen-Erzeugungssystem zur Verwendung in einem Fahrzeug gemäß Anspruch 6,
wobei der genannte Fahrzeuginformationseingang einen Motordetektor (114) aufweist, der ein An-Aus-Signal empfängt, das angibt, ob der Motor läuft oder nicht,
wobei die Steuerung eingerichtet ist, ein Signal der Betriebsfortsetzung des genannten Ionengenerators bereitzustellen, während der genannte Motordetektor das Signal empfängt, das anzeigt, dass der Motor läuft,
wobei die Steuerung eingerichtet ist, eine vorgesehene Betriebsanweisung zum Ausgeben des Betriebsstart-Signals auf Grundlage der nächsten erwarteten Fahrbeginnzeit zu streichen, wenn der genannte Motordetektor das Signal empfängt, das anzeigt, dass der Motor zu der genannten erwarteten Betriebsstartzeit läuft.

9. Ein Ionen-Erzeugungssystem zur Verwendung in einem Fahrzeug gemäß Anspruch 1, das weiterhin umfasst:
einen Betriebsplaner (130) zum Festsetzen einer Betriebsstartzeit für das Starten des Betriebs des Ionengenerators,
wobei die Steuerung eingerichtet ist, den Ionengenerator auf das Empfangen eines Einschalte-Signals hin zu starten, das von dem genannten Betriebsplaner zu der genannten Betriebsstartzeit ausgegeben wurde.

10. Ein Ionen-Erzeugungssystem zur Verwendung in einem Fahrzeug gemäß Anspruch 9,
wobei der genannte Betriebsplaner eingerichtet ist, eine Betriebsstoppzeit für das Anhalten des Betriebs des Ionengenerators anzugeben,
wobei die Steuerung eingerichtet ist, den Ionengenerator auf das Empfangen eines Aus-Signals hin anzuhalten, das vom genannten Betriebsplaner zur genannten Betriebsstoppzeit ausgegeben wurde.

11. Ein Ionen-Erzeugungssystem zur Verwendung in einem Fahrzeug gemäß Anspruch 9,
wobei die Steuerung einen Fahrzeugbatteriedetektor (118) aufweist, der ein Batteriesignal empfängt, das eine am genannten Fahrzeuginformationsdetektor erfasste Batteriestärke angibt,
wobei die Steuerung eingerichtet ist, den genannten Ionengenerator anzuhalten, wenn der genannte Fahrzeugbatteriedetektor urteilt, dass die erfasste Batteriestärke unterhalb einer vorbestimmten Schranke liegt

12. Ein Ionen-Erzeugungssystem zur Verwendung in einem Fahrzeug gemäß Anspruch 9, das weiterhin eine Anzeigefläche aufweist,
wobei die Steuerung einen Fahrzeugbatteriedetektor (118) aufweist, der ein Batteriesignal empfängt, das eine am genannten Fahrzeuginformationsdetektor erfasste Batteriestärke angibt,
wobei die Steuerung eine Betriebszeit-Auswertungseinrichtung (180) umfasst, die eine Betriebszeit des Ionengenerators auf Grundlage eines gegenwärtigen Stromverbrauchs des Ionengenerators und der erfassten Batteriestärke berechnet, wobei die Betriebszeit auf der genannten Anzeigefläche angezeigt wird.

13. Ein Ionen-Erzeugungssystem zur Verwendung in einem Fahrzeug gemäß Anspruch 9, das weiterhin eine Alarmeinheit umfasst,
wobei die Steuerung einen Fahrzeugbatteriedetektor (118) aufweist, der ein Batteriesignal empfängt, das eine am genannten Fahrzeuginformationsdetektor (200) erfasste Batteriestärke angibt,
wobei die Steuerung eine Betriebszeit-Auswertungseinrichtung (180) umfasst, die eine Betriebszeit des Ionengenerators auf Grundlage eines gegenwärtigen Stromverbrauchs des Ionengenerators und der erfassten Batteriestärke berechnet,
und wobei die Steuerung eingerichtet ist, die genannte Alarmeinheit zu aktivieren, wenn geurteilt wird, dass die genannte Betriebszeit in der von dem genannten Betriebsplaner festgelegten Betriebszeit endet.

## Revendications

1. Système de génération d'ions destiné à être utilisé dans un véhicule, ledit système comprenant un générateur d'ions (10) configuré pour être alimenté par la source d'alimentation d'un véhicule afin de fournir des ions à l'habitacle, et un contrôleur (100) configuré pour mettre en marche ledit générateur d'ions dès qu'une certaine condition est satisfaite,
dans lequel ledit contrôleur comprend une entrée d'informations du véhicule (110, 112, 113, 114, 116, 118, 120) qui reçoit des informations du véhicule détectées au niveau d'un moyen de détection d'informations du véhicule (200) placé dans ledit véhicule,
ledit contrôleur générant un signal de démarrage destiné à démarrer ledit générateur d'ions lorsque lesdites informations de véhicule reçues au niveau de ladite entrée d'informations du véhicule satisfont une condition prédéterminée, **caractérisé en ce que**
ladite entrée d'informations du véhicule comprend un détecteur de clé de démarrage (116) destiné à recevoir un signal de clé qui indique si une clé de démarrage est insérée ou retirée, ledit contrôleur étant configuré pour générer ledit signal de démarrage lorsque ledit détecteur de clé de démarrage détecte ledit signal qui indique si ladite clé de démarrage est insérée ou retirée.

2. Système de génération d'ions destiné à être utilisé dans un véhicule selon la revendication 1, qui comprend en outre un capteur de présence humaine (150) destiné à détecter un corps humain autour dudit véhicule,
ladite entrée d'informations du véhicule comprenant un détecteur de présence humaine (152) qui reçoit un signal de la part dudit capteur de présence humaine, ledit contrôleur étant configuré pour générer ledit signal de démarrage lorsque ledit détecteur de présence humaine reçoit ledit signal qui indique qu'un corps humain a été détecté.

3. Système de génération d'ions destiné à être utilisé dans un véhicule selon la revendication 1, qui comprend en outre un capteur de présence humaine (150) destiné à détecter un corps humain autour dudit véhicule,
ladite entrée d'informations du véhicule comprenant un détecteur de présence humaine (152) qui reçoit un signal de la part dudit capteur de présence humaine, et un détecteur de moteur (114) qui reçoit un signal on/off qui indique si le moteur tourne ou non,
ledit contrôleur étant configuré pour générer ledit signal de démarrage lorsque ledit détecteur de présence humaine ne reçoit aucun signal qui indique qu'un corps humain a été détecté au bout d'une durée prédéterminée après que ledit détecteur de moteur ait détecté que le moteur ne tournait pas.

4. Système de génération d'ions destiné à être utilisé dans un véhicule selon la revendication 1, qui comprend en outre un capteur de concentration (140) qui détecte une concentration d'une substance cible telle qu'une odeur ou un allergène contenu(e) dans l'habitacle,
ladite entrée d'informations du véhicule comprenant un détecteur de concentration (142) qui reçoit un signal de concentration de la part dudit capteur de concentration, et un détecteur de batterie du véhicule (118) qui reçoit un signal de batterie qui indique le niveau de la batterie,
ledit contrôleur étant configuré pour générer ledit signal de démarrage en réponse au fait que ledit détecteur de concentration ait reçu ledit signal de concentration qui indique que ladite concentration est supérieure à un niveau de référence, et pour générer un signal d'arrêt destiné à arrêter ledit générateur d'ions lorsque ledit détecteur de batterie reçoit ledit signal de batterie qui indique que le niveau de la batterie est inférieur à une valeur prédéterminée.

5. Système de génération d'ions destiné à être utilisé dans un véhicule selon la revendication 4, dans lequel ledit contrôleur est configuré pour générer ledit signal d'arrêt lorsque ledit détecteur de concentration reçoit ledit signal de concentration qui indique que la concentration st inférieure audit niveau de référence.

6. Système de génération d'ions destiné à être utilisé dans un véhicule selon la revendication 1, dans lequel ladite entrée d'informations du véhicule comprend une mémoire d'historique de conduite (120) qui stocke un historique de conduite dudit véhicule, et un anticipateur de durée de conduite (122) qui obtient un moment de début de conduite anticipé suivant à partir dudit historique de conduite dans ladite mémoire d'historique de conduite,
ledit contrôleur étant configuré pour générer ledit signal de démarrage à un moment qui précède ledit moment de début de conduite anticipé suivant selon une durée prédéterminée.

7. Système de génération d'ions destiné à être utilisé dans un véhicule selon la revendication 6, dans lequel ladite entrée d'informations du véhicule comprend un détecteur de moteur (114) qui reçoit un signal on/off qui indique si le moteur tourne ou non,
ledit contrôleur étant configuré pour arrêter ledit générateur d'ions lorsque ledit détecteur de moteur détecte que le moteur ne tourne pas au bout d'une durée prédéterminée à partir du moment où ledit signal de démarrage a été généré.

8. Système de génération d'ions destiné à être utilisé dans un véhicule selon la revendication 6, dans lequel ladite entrée d'informations du véhicule comprend un détecteur de moteur (114) qui reçoit un signal on/off qui indique si le moteur tourne ou non,
ledit contrôleur étant configuré pour fournir un signal de maintien du fonctionnement dudit générateur d'ions lorsque ledit détecteur de moteur reçoit ledit signa 1 qui indique que le moteur tourne,
ledit contrôleur étant configuré pour annuler une instruction de fonctionnement programmé qui consiste à fournir ledit signal de démarrage sur la base dudit moment de début de conduite anticipé suivant lorsque ledit détecteur de moteur reçoit ledit signal qui indique que le moteur tourne audit moment de démarrage prévu.

9. Système de génération d'ions destiné à être utilisé dans un véhicule selon la revendication 1, qui comprend en outre :
un programmateur de fonctionnement (130) destiné à définir un moment de démarrage dudit générateur d'ions,
ledit contrôleur étant configuré pour démarrer ledit générateur d'ions lors de la réception d'un signal de démarrage fourni par ledit programmateur de fonctionnement audit moment de démarrage.

10. Système de génération d'ions destiné à être utilisé dans un véhicule selon la revendication 9, dans lequel ledit programmateur de fonctionnement est configuré pour déclencher un moment d'arrêt qui consiste à arrêter ledit générateur d'ions,
ledit contrôleur étant configuré pour arrêter ledit générateur d'ions en cas de réception d'un signal d'arrêt fourni par ledit programmateur de fonctionnement audit moment d'arrêt.

11. Système de génération d'ions destiné à être utilisé dans un véhicule selon la revendication 9, dans lequel ledit contrôleur comprend un détecteur de batterie du véhicule (118) qui reçoit un signal de batterie qui indique un niveau de batterie détecté au niveau dudit détecteur d'informations du véhicule,
ledit contrôleur étant configuré pour arrêter ledit générateur d'ions lorsque ledit détecteur de batterie du véhicule juge que le niveau de batterie détecté est inférieur à un niveau prédéterminé.

12. Système de génération d'ions destiné à être utilisé dans un véhicule selon la revendication 9, qui comprend en outre un écran,
ledit contrôleur comprenant un détecteur de batterie du véhicule (118) qui reçoit un signal de batterie qui indique le niveau de batterie détecté au niveau dudit détecteur d'informations du véhicule,
ledit contrôleur comprenant un évaluateur de durée de fonctionnement (180) qui calcule une durée de fonctionnement dudit générateur d'ions sur la base d'une consommation de courant dudit générateur d'ions et du niveau de batterie détecté, ladite durée de fonctionnement étant affichée sur ledit écran.

13. Système de génération d'ions destiné à être utilisé dans un véhicule selon la revendication 9, qui comprend en outre une section d'alarme,
ledit contrôleur comprenant un détecteur de batterie du véhicule (118) qui reçoit un signal de batterie qui indique le niveau de batterie détecté au niveau dudit détecteur d'informations du véhicule (200),
ledit contrôleur comprenant un évaluateur de durée de fonctionnement (180) qui calcule une durée de fonctionnement dudit générateur d'ions sur la base d'une consommation de courant dudit générateur d'ions et du niveau de batterie détecté, et
ledit contrôleur étant configuré pour activer ladite section d'alarme afin d'émettre une alarme lorsque ladite durée de fonctionnement est jugée comme se terminant à la fin de ladite durée de fonctionnement définie par ledit programmateur de fonctionnement.
